Europäisches Patentamt

European Patent Office

Office européen des brevets

(11) Veröffentlichungsnummer: **0 279 886 B1**

# EUROPÄISCHE PATENTSCHRIFT

(45) Veröffentlichungstag der Patentschrift: **06.11.91**

(51) Int. Cl.⁵: **G05B 19/41**

(21) Anmeldenummer: **87102813.0**

(22) Anmeldetag: **27.02.87**

(54) **Verfahren zur Nullpunkt-Ermittlung eines Schweisselementehalters auf einem Koordinaten-Schweisstisch und Vorrichtung zur Durchführung des Verfahrens.**

(43) Veröffentlichungstag der Anmeldung:
**31.08.88 Patentblatt 88/35**

(45) Bekanntmachung des Hinweises auf die Patenterteilung:
**06.11.91 Patentblatt 91/45**

(84) Benannte Vertragsstaaten:
**AT BE CH FR GB IT LI**

(56) Entgegenhaltungen:
**FR-A- 2 514 912**
**GB-A- 1 064 258**
**US-A- 3 466 514**
**US-A- 3 947 667**
**US-A- 4 500 970**

(73) Patentinhaber: **HBS Heberle Bolzenschweiss-Systeme GmbH & Co KG**
**Friesenheimer Strasse 23-25**
**W-6800 Mannheim(DE)**

(72) Erfinder: **Heberle, Manfred**
**Ohmstrasse 3**
**W-8060 Dachau(DE)**

(74) Vertreter: **Weber, Otto Ernst, Dipl.-Phys.**
**Hofbrunnstrasse 36**
**W-8000 München 71(DE)**

Rank Xerox (UK) Business Services

**Beschreibung**

Die Erfindung betrifft ein verfahren und eine Vorrichtung zum Bestimmen eines definierten Ausgangszustandes eines Koordinaten-Schweißtischesbezüglich der auf einen Schweißelementehalter bezogenen Ist-Koordinaten.

Aus der US-A 4,500,970 ist es bekannt, mit Hilfe von Sensoren einen Soll-Nullpunkt eines Soll-Koordinatensystems auf einen Ist-Nullpunkt eines Ist-Koordinatensystems festzulegen.

Weiterhin ist aus der US-A 3,466,514 ein Verfahren bekannt, bei welchem ein Werkstück, insbesondere mikroelektronische Teile in einer Ebene bezüglich eines Koordinatensystems positioniert werden kann. Die Lage des Werkstückes wird dabei durch von dem Werkstück entfernt liegende Abtasteinrichtungen überprüft.

Bevor ein Werkstück mit Hilfe einer elektronisch gesteuerten Schweißvorrichtung an vorgegebenen Punkten geschweißt werden soll, ist es erforderlich, daß das Werkstück und das Schweißelement in einem definierten Ausgangszustand ausrichtet werden, in welchem der Soll-Nullpunkt des Schweißelements bzw. des Schweißelementehalters mit dem Ist-Nullpunkt des Werkstücks übereinstimmt. Würde dies nicht geschehen, so würden alle Schweißpunkte mit einem entsprechenden Versatz angebracht werden.

In der Praxis ist es so, daß der Schweißelementehalter, beispielsweise bedingt durch das Herstellungsverfahren, einen Innendurchmesserversatz aufweist, so daß ein in den Schweißelementehalter eingesetztes Schweißelement außermittig angeordnet ist. Wird nun der Schweißelementehalter auf den Soll-Nullpunkt eingestellt, so liegt das Schweißelement zwangsläufig um einen entsprechenden Versatz neben dem tatsächlichen Wert. Der Ist-Nullpunkt unterscheidet sich also abhängig vom Innendurchmesserversatz des Schweißelementehalters vom Soll-Nullpunkt.

Bei den bekannten Verfahren könnte lediglich das Werkstück in Bezug auf seine Auflagefläche positioniert werden, jedoch ist es nicht möglich, einen Abgleich zwischen der Lage des Werkstückes und der Lage eines Schweißelementehalters zu bewerkstelligen.

Der Erfindung liegt die **Aufgabe** zugrunde, ein Verfahren und eine Vorrichtung der eingangs genannten Art anzugeben, mit welchen dieser Nullpunkt-Versatz auf einfache Weise ermittelt und korrigiert werden kann.

Diese Aufgabe wird in Bezug auf das Verfahren durch die Merkmale des Patentanspruchs 1 und in Bezug auf die Vorrichtung durch die Merkmale des Patentanspruchs 2 gelöst. Vorteilhafte Weiterbildungen der Vorrichtung sind in den Unteransprüchen und Ausführungsbeispielen enthalten.

Erfindungsgemäß wird der Schweißelementehalter mit einem Meßdorn bestückt, der einen vorgegebenen Durchmesser aufweist. In einem vorgegebenen Abstand vom Ist-Nullpunkt auf dem Koordinaten-Schweißtisch werden zwei, jeweils eine aktive Sensorfläche aufweisende, ausgangsseitig mit einer elektronischen Auswerteeinheit verbundene Anschlagstücke unter einem 90°-Winkel angeordnet. Der Schweißelementehalter und/oder die Koordinaten-Schweißfläche werden so lange relativ zueinander bewegt, bis der Rand des Meßdorns beide Sensorflächen der Anschlagstücke aktiviert. Unter Berücksichtigung des vorgegebenen Abstandes der Sensorflächen vom Ist-Nullpunkt und des Meßdorndurchmessers wird der abgespeicherte Nullpunkt-Sollwert korrigiert.

Indem die beiden Sensorflächen in einem rechten Winkel zueinander ausgerichtet werden und der fiktive Schnittpunkt der einander zugewandten aktiven Sensorflächen in dem vorgegebenen Ist-Nullpunkt der Werkstückaufnahmeplatte liegt, muß bei der Korrektur der abgespeicherten Soll-Nullpunkt-Koordinaten lediglich der Meßdorn-Durchmesser berücksichtigt werden. Der Ist-Nullpunkt auf der Werkstückaufnahmeplatte ist von den Anschlagstücken genau festgelegt.

Die Erfindung hat den Vorteil, daß jeder Innendurchmesserversatz eines Schweißelementehalters individuell korrigiert werden kann. Der Ausrichtvorgang kann daher automatisch ablaufen, ohne daß eine Bedienperson eingreifen muß.

Eine vorteilhafte Weiterbildung des Verfahrens besteht darin, daß der Schweißelementehalter in einer Koordinatenrichtung und die Werkstückaufnahmeplatte in die andere Koordinatenrichtung bewegt wird.

Eine Vorrichtung zur Durchführung des Verfahrens weist einen Koordinaten-Schweißtisch und eine SchweißelementeSteuerung mit einem Informationsspeicher auf, in dem das Soll-Koordinatensystem des Schweißtisches bzw. eines darauf angeordneten Werkstückes gespeichert ist.

Außerdem ist ein verfahrbarer, maßgenau zu positionierender Schweißelementehalter vorhanden. Erfindungsgemäß sind auf dem Koordinaten-Schweißtisch zwei ausgangsseitig mit der Schweißelementesteuerung verbundene Anschlagstücke in einem 90°-Winkel angeordnet, so daß jedes Anschlagstück als Sensor für eine Koordinatenrichtung dient. In dem elektrisch steuer- und verfahrbaren Schweißelementehalter ist ein Meßdorn eingesetzt, der bei Berührung die Anschlagstücke aktiviert.

Diese Ausgestaltung hat den Vorteil, daß über den Meßdorn und die Sensorfläche ein elektrisches Signal an die Auswerteeinheit gegeben werden kann. Im einfachsten Fall erfolgt dies dadurch, daß beide Sensorflächen mit unterschiedlichem Spannungspotential beaufschlagt sind, und daß mit dem Meßdorn eine leitende Verbindung zwischen den beiden Sensorflächen hergestellt wird, wenn diese in einem entsprechenden Abstand nebeneinander angeordnet sind. Der Potentialwechsel an dem einen Anschlag wird dann ausgewertet. Es ist jedoch auch möglich, entsprechende Signale unmittelbar und unabhängig voneinander auf die beiden Anschlagflächen zu leiten oder dort abzugreifen.

Eine vorteilhafte Weiterbildung der Vorrichtung besteht darin, daß zwischen den Anschlagstücken und der Werkstückaufnahmeplatte elektrische Steckverbindungen vorhanden sind und daß die Meßleitungen plattenseitig untergebracht und mit den Steckverbindungen kontaktiert sind. Dies hat den Vorteil, daß an den Anschlagstücken selbst keine Meßleitungen angeordnet sein müssen, und daß daher die Handhabung der Anschlagstücke und das Bestücken der Werkstückaufnahmeplatte vereinfacht wird. Die Anschlagstücke müssen lediglich auf die Werkstückaufnahmeplatte aufgesetzt werden.

Eine bevorzugte Weiterbildung dieser Steckverbindung besteht darin, daß auf der Werkstückaufnahmeplatte ein mit der Meßleitung verbundener Anschlagstift ausgebildet ist, der von einer Buchse im Anschlagstück aufgenommen wird.

Das hat den Vorteil, daß der Anschlagstift auch zum Ausrichten des Werkstücks verwendet werden kann. Mit Hilfe des Anschlagstiftes kann durch Abfühlen eines Meßsignals festgestellt werden, ob das Werkstück am Anschlagstift anliegt. Somit ist auch automatisch überprüfbar, ob das Werkstück in der geforderten Lage auf der Werkstückaufnahmeplatte ausgerichtet ist.

Um zu verhindern, daß der Meßdorn, der Schweißelementehalter oder das Anschlagstück bei der Kontaktierung beschädigt werden, was beispielsweise durch die Nachlaufzeiten der Antriebsmotoren hervorgerufen werden könnte, sind die Sensorflächen der Anschlagstücke in der Bewegungsrichtung des Schweißelementehalters auslenkbar angeordnet.

Dies wird bevorzugt dadurch erreicht, daß zwischen der Werkstückaufnahmeplatte und dem Anschlagstück ein ortsfest mit der Werkstückaufnahmeplatte verbundenes Adapterstück angeordnet ist, und daß das Anschlagstück mit dem Adapterstück elastisch verbunden ist. Auf diese Weise können die elektrischen Verbindungen ortsfest auf der Werkstückaufnahmeplatte angeordnet sein, während das Anschlagstück dem Meßdorn ausweichen kann.

Eine elastische Verbindung zwischen dem Adapterstück und dem Anschlagstück wird bevorzugt dadurch erreicht, daß die beiden Stücke magnetisch aufeinander gehalten werden, und daß sie in einer definierten Lage durch zwei nebeneinander angeordnete Kugeln und entsprechende Ausnehmungen zur Aufnahme der Kugeln gehalten werden. Mit Hilfe der Kugeloberflächen und der entsprechend angepaßten Ausnehmungen kann eine Zentrierung erreicht werden.

Im folgenden wird die Erfindung beispielhaft anhand von Figuren erläutert.

Fig. 1     zeigt schematisch eine Aufsicht auf eine Werkstückaufnahmeplatte;

Fig. 2     zeigt schematisch einen Querschnitt durch die Werkstückaufnahmeplatte;

Fig. 3     zeigt schematisch einen Schweißelementehalter mit einem Meßdorn;

Fig. 4     zeigt schematisch eine Sensor-Anordnung, und

Fig. 5     zeigt schematisch eine Seitenansicht eines mit einem Adapter versehenen Sensors.

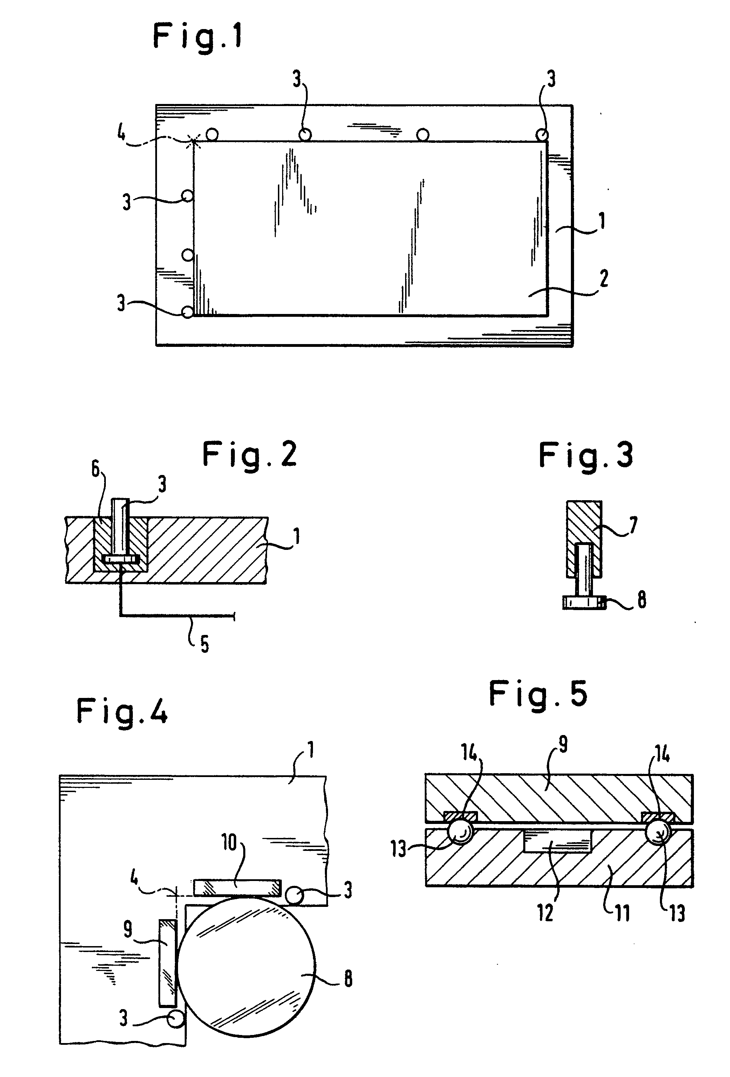

Zum Verständnis der folgenden Figuren ist vorauszuschicken, daß die in Fig. 1 gezeigte Werkstückaufnahmeplatte 1 ein als Koordinatenschweißtisch dienendes Teil einer elektronisch gesteuerten Schweißeinrichtung ist. Mit Hilfe der Steuerung kann ein mit einem Schweißelementehalter zur Aufnahme eines Schweißelementes versehenes Schweißgerät an vorgegebenen Schweißpunkten über der Zeichenebene positioniert werden, um dort auf einem Werkstück 2 eine Schweißung auszuführen. Die Schweißpunkte sind durch ihre X- und Y-Koordinaten bezüglich eines auf der Werkstückaufnahmeplatte vorgegebenen Koordinatensystems festgelegt, dessen Ist-Nullpunkt mit 4 bezeichnet ist. Die Schweißeinrichtung und die Steuerung sind aus Gründen der Übersichtlichkeit nicht dargestellt.

Das Werkstück 2 liegt an zwei rechtwinklig zueinander ausgerichteten Reihen von Anschlagstiften 3 an. Der fiktive Schnittpunkt der beiden Anschlagstiftreihen stellt den Ist-Nullpunkt 4 des Koordinatensystems dar. Bevor auf dem Werkstück 2 eine Schweißung durchgeführt werden kann, muß sichergestellt sein, daß sich das in der Steuerung abgespeicherte Soll-Koordinatensystem mit dem Ist-Koordinatensystem der Werkstückaufnahmeplatte deckt. Es kann nämlich möglich sein, daß das im Schweißelementehalter angeordnete Schweißelement aufgrund eines Innendurchmesserversatzes des Schweißelementehalters nicht im Mittelpunkt des Schweißelementehalters liegt, so daß das Soll-Koordinatensystem um den entsprechenden Versatz gegenüber dem Ist-Koordinatensystem verschoben ist. Deshalb muß anfänglich ein Abgleich durchgeführt werden.

Fig. 2 veranschaulicht, auf welche Weise die Anschlagstifte 3 in der Werkstückaufnahmeplatte 1 angeordnet sind. In der Werkstückaufnahmeplatte 1, die typischerweise aus Stahl besteht, ist für jeden Anschlagstift 3 eine Ausnehmung vorgesehen, in welcher der Anschlagstift 3 in einem elektrisch isolierenden Material 6 gelagert ist. Der elektrisch leitende Anschlagstift 3 ist über eine Meßleitung 5 mit einer elektronischen Auswerteeinheit verbunden. Die Auswerteeinheit kann aus einer einfachen logischen Schaltung bestehen. Sie kann aber auch Teil der Steuerung der Schweißvorrichtung sein. (nicht dargestellt)

Fig. 3 zeigt rein schematisch einen Schweißelementehalter 7, in welchen ein Meßdorn 8 eingesteckt ist. Der Durchmesser des in den Schweißelementehalter 7 eingespannten hinteren Endes des Meßdorns 8 entspricht genau dem Aufnahmedurchmesser des Schweißelementehalters 7. Die Längsachse des Meßdorns 8 liegt daher genau auf der Längsachse eines Schweißelementes, welches zum Durchführen einer Schweißung in den Schweißelementehalter 7 eingesteckt wird. An seinem freien Ende weist der Meßdorn einen vorgegebenen, genau definierten Außendurchmesser auf, der typischerweise 10 mm beträgt.

Fig. 4 zeigt, daß auf der Werkstückaufnahmeplatte 1 ein erstes und zweites Anschlagstück 9, 10 angeordnet ist, mit deren Hilfe ein Abgleich und maßgenaues Positionieren des Schweißelementehalters 7 bzw. eines Schweißelementes durchgeführt werden kann. Das erste Anschlagstück 9 dient als Sensor in die eine Koordinatenrichtung, während das zweite Anschlagstück 10 als Sensor für die zweite Koordinatenrichtung dient. Der Ist-Nullpunkt des Schweißelementehalters wird folgendermaßen ermittelt: Nachdem der Meßdorn 8 in den Schweißelementehalter 7 eingesteckt ist, wird der Schweißelementehalter 7 und die Werkstückaufnahmeplatte 1 mit Hilfe der elektronischen Steuerung relativ zueinander bewegt und der Meßdorn 8 dem Nullpunkt 4 angenähert, bis der Meßdorn 8 sowohl die erste Sensorfläche als auch die zweite Sensorfläche der Anschlagstück 9, 10 berührt. Bei einer Berührung der Anschlagstücke 9 und 10 wird ein entsprechendes Signal an die Steuerung weitergeleitet. Die Koordinaten-Werte des Meßdorns 8 sind in dieser Position in der Steuerung abgespeichert. Unter Berücksichtigung des Meßdorndurchmessers kann daher der Ist-Nullpunkt 4 von der Steuerung errechnet werden. Dies erfolgt dadurch, daß von den beiden betreffenden Koordinaten-Werten jeweils der halbe Meßdorndurchmesser abgezogen wird. Auf diese Weise kann für jeden Schweißelementehalter unabhängig von seinem individuellen Innendurchmesserversatz der Ist-Nullpunkt genau ermittelt werden.

In dem hier gezeigten Beispiel weisen die beiden Anschlagstücke 9, 10 auf der einander zugewandten Seite eine plane, aktive Sensorfläche auf. Die Anschlagstücke 9, 10 können im übrigen so ausgebildet sein, daß bei einer Berührung durch den Meßdorn 8 ein elektro-mechanischer Schalter betätigt wird. Es kann aber zumindest auch die plane, als Sensor wirkende Anschlagfläche elektrisch leitend ausgebildet sein, so daß bei einer Kontaktierung durch den Meßdorn 8 ein Kontrollsignal übergeben werden kann. An Stelle der beiden Anschlagstücke 9, 10 kann auch ein optischer Sensor vorgesehen sein.

Wenn die Anschlagstifte 3 entsprechend der Anordnung in Fig. 2 mit einer Meßleitung 5 ausgestattet sind, können sie dazu dienen, festzustellen, ob das Werkstück 2 tatsächlich in der gewünschten und erforderlichen Position auf der Werkstückaufnahmeplatte angeordnet ist. Dies kann dadurch erfolgen, daß das Werkstück 2 mit einem Kontrollpotential beaufschlagt wird, und daß dieses Potential an den einzelnen Anschlagstiften 3 abgefragt wird. Die den ersten und zweiten Anschlagstücken 9, 10 benachbarten Anschlagstifte 3 können ferner auch mit den ersten bzw. zweiten Anschlagstücken 9, 10 in elektrischer Verbindung stehen, so daß die Meßsignale der beiden Anschlagstücke 9, 10 über die zugehörigen Anschlagstifte 3 zur Auswerteeinheit geleitet werden können. Dies kann im einfachsten Fall dadurch erfolgen, daß die beiden Anschlagstücke 9, 10 mit Buchsen versehen sind, welche die Anschlagstifte 3 aufnehmen. (nicht dargestellt)

Fig. 5 zeigt ein Beispiel dafür, auf welche Weise das erste bzw. zweite Anschlagstück 9 bzw. 10 auf einem Adapterstück 11 angeordnet ist. Das Adapterstück 11 ist lösbar aber ortsfest auf der Werkstückaufnahme 1 angeordnet. Auf dem Adapterstück 11 befindet sich in einer definierten Lage eines der Anschlagstücke 9 bzw. 10. Das Anschlagstück 9 ist nicht fest mit dem Adapterstück 11 verbunden, sondern es kann in horizontaler Richtung ausweichen, wenn der Meßdorn 8 auftrifft. Das Anschlagstück 9 wird durch einen Permanentmagneten 12 gehalten, welcher im Adapterstück 11 eingebettet ist. Alternativ dazu könnte es auch unter Verwendung einer Feder elastisch auf dem Adapterstück 11 gelagert sein. Um eine definierte Lage zwischen dem Adapterstück 11 und dem Anschlagstück 9 sicherzustellen, sind zwischen beiden Stücken Anschläge vorhanden. In dem hier gezeigten Beispiel bestehen sie aus zwei nebeneinander angeordneten Kugellagerschalen im Adapterstück 11, die jeweils teilweise eine Kugel 13 aufnehmen. Die über die Adapteroberfläche herausragenden Kugelabschnitte werden von entsprechenden Ausnehmungen 14 im Anschlagstück 9 formschlüssig aufgenommen.

## Patentansprüche

1.   Verfahren zum Bestimmen eines definierten Ausgangszustandes eines Koordinaten-Schweißtisches bezüglich der auf einen Schweißelementehalter (7) bezogenen Ist-Koordinaten und der in einem Informationsspeicher einer Schweißelementesteuerung abgespeicherten, auf den Koordinaten-Schweißtisch bzw. ein darauf angeordnetes Werkstück (2) bezogenen, Schweißpunkte kennzeichnenden Soll-Koordinaten mit folgenden Verfahrensschritten:

a) Bestücken des Schweißelementehalters (7) mit einem einen vorgegebenen Durchmesser aufweisenden Meßdorn (8),

b) Bewegen des Schweißelementehalters (7) und/oder Koordinaten-Schweißtisches relativ zueinander so lange, bis der Rand des Meßdorns (8) zwei jeweils ausgangsseitig mit einer elektronischen Auswerteeinheit verbundene, jeweils eine aktive Sensorfläche aufweisende und unter einem 90° - Winkel angeordnete Anschlagstücke (9,10) aktiviert.

c) Ermitteln des Versatzes des Ist-Koordinaten-Nullpunktes und des Soll-Koordinaten-Nullpunktes durch Vergleich der Ist-Koordinaten mit den Soll-Koordinaten des Schweißelementehalters (7), die durch den Abstand der aktiven Sensorflächen vom Soll-Nullpunkt und dem vorgegebenen Meßdorn-Durchmesser bestimmt sind,

d) Korrektur der Soll-Koordinaten um den ermittelten Versatz in der Weise, daß die Koordinaten des Ist-Nullpunktes und des Soll-Nullpunktes zur Übereinstimmung gebracht werden.

2. Schweißvorrichtung mit einem Koordinaten-Schweißtisch, (1), einer Schweißelementesteuerung mit Informationsspeicher, in der das Soll-Koordinaten-System des Schweißtisches (1) bzw. eines darauf angeordneten Werkstückes (2) gespeichert ist, und einem verfahrbaren, maßgenau zu positionierenden Schweißelementehalter (7), wobei auf dem Koordinaten-Schweißtisch (1) zwei ausgangsseitig mit der Schweißelementesteuerung verbundene Anschlagstücke (9,10) in einem 90° -Winkel angeordnet sind, so daß jedes Anschlagstück (9,10) als Sensor für eine Koordinatenrichtung dient, und in den elektronisch steuer- und verfahrbaren Schweißelementehalter (7) ein Meßdorn (8) eingesetzt ist, der bei Berührung die Anschlagstücke (9,10) aktiviert, so daß über eine elektronische Auswerteeinheit der Nullpunkt-Versatz ermittel- und korrigierbar ist.

3. Schweißvorrichtung nach Anspruch 2, wobei die Sensorfläche jedes Anschlagstückes (9,10) elektrisch leitend ausgebildet, gegenüber der Werkstückaufnahmeplatte (1) elektrisch isoliert angeordnet und mit der elektronischen Auswerteeinheit über jeweils eine Meßleitung (5) elektrisch leitend verbunden ist.

4. Schweißvorrichtung nach Anspruch 2 und 3, wobei zwischen den Anschlagstücken (9,10) und der Werkstückaufnahmeplatte (1) elektrische Steckverbindungen vorhanden, die Meßleitungen (5) plattenseitig untergebracht und mit den Steckverbindungen kontaktiert sind.

5. Schweißvorrichtung nach Anspruch 4, wobei als Steckverbindung ein auf der Werkstückaufnahmeplatte (1) über die Meßleitung (5) mit der Auswerteeinheit verbundener und elektrisch leitender Anschlagstift (3) zur Aufnahme einer Buchse in dem Anschlagstück (9, 10) ausgebildet ist und wobei der elektrisch leitende Anschlagstift (3) in einem gegenüber der Werkstückaufnahmeplatte (1) isolierenden Material (6) angeordnet ist.

6. Schweißvorrichtung nach Anspruch 2, wobei die Anschlagstücke (9,10) in der Bewegungsrichtung des Schweißelementehalters (7) auslenkbar angeordnet sind.

7. Schweißvorrichtung nach Anspruch 6, wobei zwischen der Werkstückaufnahmeplatte (1) und dem Anschlagstück (9,10) ein ortsfest mit der Werkstückaufnahmeplatte (1) verbundenes Adapterstück (11) angeordnet ist und wobei das Anschlagstück (9,10) mit dem Adapterstück (11) elastisch verbunden ist.

8. Schweißvorrichtung nach Anspruch 7, wobei das Adapterstück (11) und das Anschlagstück (9,10) magnetisch aufeinander gehalten werden und wobei sie in einer definierten Lage durch zwei nebeneinander angeordnete Kugeln (13) und entsprechende Ausnehmungen zur Aufnahme der Kugeln (13) gehalten werden.

9. Schweißvorrichtung nach Anspruch 2, wobei die Werkstückaufnahmeplatte (1) elektrisch leitende, das Werkstück (2) begrenzende Anschlagstifte (3) ausweist, die in einem elektrisch isolierenden Material (6) in der Werkstückaufnahmeplatte (1) angeordnet sind und über eine Meßleitung (5) mit der Auswerteeinrichtung verbunden sind.

## Claims

1. Method for determining a defined starting state of a coodinate welding table with respect to the actual coordinates related to a welding element holder (7) and the desired coordinates stored in an information memory of a welding element control, related to the coordinate welding table or a workpiece (2) located thereon and characterizing weld spots having the following method steps;

a) loading the welding element holder (7) with a test mandrel (8) having a predetermined diameter,

b) moving the welding element holder (7) and/or the coordinate welding table relative to one another until the edge of the test mandrel (8) activates two stop pieces (9, 10) connected on the output side to an electronic evaluating unit, which in each case have an active sensor face and arranged under an angle of 90°,

c) determining the displacement of the actual coordinate origin and the desired coordinate origin by comparison of the actual coordinate with the desired coordinate of the welding element holder (7), which are determined by the distance of the active sensor faces from the desired origin and the predetermined test mandrel diameter and

d) correction of the desired coordinate by the determined displacement, so as to bring about coincidence between the coordinates of the actual origin and the desired origin.

2. Welding fixture with a coordinate welding table (1), a welding element control with information memory, in which is stored the desired coordinate system of the welding table (1) or a workpiece (2) located thereon and a displaceable, accurately positionable welding element holder (7), in which on the coordinate welding table (1) are arranged at an angle of 90° two stop pieces (9, 10) connected at the output side to the welding element control, so that each stop piece (9, 10) serves as a sensor for one coordinate direction and a test mandrel (8) is inserted in the electronically controllable and movable welding element holder (7) and which on contact activates the stop pieces (9, 10), so that by means of an electronic evaluating unit the origin displacement can be determined and corrected.

3. Welding fixture according to claim 2, in which the sensor face of each stop piece (9, 10) is constructed in an electrically conductive manner, is electrically insulated from the work supporting plate (1) and is electrically conductively connected by in each case one measuring line (5) to the electronic evaluating unit.

4. Welding fixture according to claims 2 and 3, in which between the stop faces (9, 10) and the work holding plate (1) are provided electric plug connections, the measuring lines (5) are located on the plate side and are contacted with the plug connections.

5. Welding fixture according to claim 4, in which the plug connection is constituted by an electrically conductive stop pin (3) for receiving a bush in the stop piece (9, 10) constructed on the work supporting plate (1) and connected via the measuring line (5) to the evaluating unit and the electrically conductive stop pin (3) is placed in a material (6) insulated from the work supporting plate (1).

6. Welding fixture according to claim 2, in which the stop pieces (9, 10) can be deflected in the movement direction of the welding element holder (7).

7. Welding fixture according to claim 6, in which an adaptor piece (11) fixed to the work supporting plate (1) is located between the latter and the stop piece (9, 10) and the latter is elastically connected to the adaptor piece (11).

8. Welding fixture according to claim 7, in which the adaptor piece (11) and the stop piece (9, 10) are held magnetically on one another and in which they are kept in a clearly defined position by two juxtaposed balls (13) and corresponding recesses for receiving the balls (13).

9. Welding fixture according to claim 2, in which the work supporting plate (1) has electrically conductive stop pins (3) defining the workpiece (2) and arranged in an electrically insulating material (6) in the work supporting plate (1) and which are connected by a measuring line (5) to the evaluating unit.

**Revendications**

1. Procédé pour déterminer une position de départ, déterminée, d'une table de soudage à coordonnées par rapport aux coordonnées réelles rapportées à un support d'élément de soudage (7), et aux coordonnées de consigne enregistrées dans une mémoire d'information d'une commande de l'élément de soudage, rapportées aux coordonnées de consigne des points de soudage pour une table de soudage à coordonnées et à une pièce d'oeuvre (2) disposée sur elle, procédé comprenant les étapes suivantes :

a) on garnit le support de l'élément de soudage (7) d'un tampon à limites (8) d'un diamètre prédéterminé,

b) on déplace le support de l'élément de soudage (7) et/ou la table de soudage à coordonnées l'un par rapport à l'autre jusqu'à ce que le bord du tampon (8) active deux pièces de butée (9, 10) dont la sortie est reliée à une unité d'exploitation électronique, ces pièces de butée ayant chacune une surface de détection active et ces pièces (9, 10) sont disposées l'une par rapport à l'autre suivant un angle de 90°,

c) on détermine le décalage entre le zéro des coordonnées réelles et le zéro des coordonnées de consigne par comparaison des coordonnées réelles et des coordonnées de consigne du support (7) de l'élément de soudage, définissant l'écart entre les surfaces de détection actives et le zéro de consigne et le diamètre prédéterminé du tampon à limites,

d) on corrige les coordonnées de consigne du décalage ainsi déterminé en faisant coïncider le zéro des coordonnées réelles avec le zéro des coordonnées de consigne.

2. Appareil de soudage à table de soudage à coordonnées (1), une commande de l'élément de soudage avec mémoire d'information dans laquelle est enregistré le système de coordonnées de consigne de la table de soudage (1) ou d'une pièce d'oeuvre (2) portée par la table et un support d'élément de soudage (7) mobile par rapport à la table et qui doit être positionné de manière précise,

deux butées (9, 10) étant prévues sur la table de soudage à coordonnées (1) en faisant entre elles un angle de 90°, la sortie de ces pièces étant reliée à la commande de l'élément de soudage, et en ce que chaque pièce de butée (9, 10) constitue un capteur du dispositif de coordonnées et un tampon à limites (8) est placé dans le support (7) de l'élément de soudage, mobile, à commande électronique, ce tampon activant les pièces de butée (9, 10) par contact pour déterminer par une unité d'exploitation électronique, le décalage du zéro et pour le corriger.

3. Appareil de soudage selon la revendication 2, caractérisé en ce que les surfaces de détection de chaque pièce de butée (9, 10) sont conductrices électriques en étant montées de manière isolée électriquement par rapport à la plaque (1) de réception de la pièce, et en étant reliées électriquement à l'unité d'exploitation électronique par chaque fois une ligne de mesure (5).

4. Appareil de soudage selon l'une quelconque des revendications 2 et 3, caractérisé en ce qu'entre les pièces de butée (9, 10) et la plaque de réception de pièce (1) il y a des liaisons électriques par enfichage, les conducteurs de mesure (5) étant logés du côté de la plaque et mis en contact par les liaisons d'enfichage.

5. Appareil de soudage selon la revendication 4, caractérisé en ce que la liaison par enfichage est constituée par une tige de butée (3) conductrice d'électricité et reliée à l'unité d'exploitation par un conducteur de mesure (5) sur la plaque porte-pièce (1), et pour recevoir une douille dans la pièce de butée (9, 10), la tige de butée (3) conductrice d'électricité étant placée dans un matériau (6) isolant par rapport à la plaque porte-pièce (1).

6. Appareil de soudage selon la revendication 2, caractérisé en ce que les pièces de butée (9, 10) peuvent déboîter dans la direction de mouvement du support d'élément de soudage (7).

7. Appareil de soudage selon la revendication 6, caractérisé en ce qu'entre la plaque porte-pièce (1) et la pièce de butée (9, 10) il est prévu une pièce d'adaptation (11) reliée solidairement à la plaque porte-pièce (1) et la pièce de butée (9, 10) est reliée élastiquement à l'adaptateur (11).

8. Appareil de soudage selon la revendication 7, caractérisé en ce que l'adapteur (11) et la pièce de butée (9, 10) sont reliés de manière magnétique et sont maintenus dans une position déterminée par deux billes (13) juxtaposées, maintenues dans des cavités correspondantes recevant les billes (13).

9. Appareil de soudage selon la revendication 2, caractérisé en ce que la plaque porte-pièce (1) comporte des tiges de butée (13) conductrices d'électricité et délimitant la pièce (2), ces tiges étant placées dans la plaque porte-pièce (1) par l'intermédiaire d'un matériau (6) isolant électrique et relié à l'unité d'exploitation par un conducteur de mesure (5).

# Fig.1

# Fig.2

# Fig.3

# Fig.4

# Fig.5